Europäisches Patentamt

European Patent Office

Office européen des brevets

(11) Publication number : **0 490 688 A1**

## (12) EUROPEAN PATENT APPLICATION

(21) Application number : **91311580.4**

(22) Date of filing : **12.12.91**

(51) Int. Cl.⁵ : **B01F 7/00, A23N 17/00**

(30) Priority : **12.12.90 IE 4474/90**

(43) Date of publication of application :
**17.06.92 Bulletin 92/25**

(84) Designated Contracting States :
**AT BE CH DE DK ES FR GB GR IT LI LU NL SE**

(71) Applicant : **SALFORD ENGINEERING LIMITED**
**Borris, County Carlow (IE)**

(72) Inventor : **Moore, Richard Christopher**
**Kilcarrig, Bagenalstown**
**County Carlow (IE)**

(74) Representative : **Bowman, Paul Alan et al**
**LLOYD WISE, TREGEAR & CO. Norman House**
**105-109 Strand**
**London WC2R OAE (GB)**

(54) **Mixing apparatus.**

(57) A mixing apparatus (1) for mixing ingredients of animal feed is suitable for washing and chopping some or all of the ingredients. The apparatus (1) comprises a mixing compartment (18) and a washing compartment (19). Washed ingredients are delivered through an outlet (64) from the washing compartment (19) into a chopping compartment (62) for chopping by a chopper (71). An auger screw (88) conveys the chopped ingredients into the mixing compartment (18) through an inlet (85) for mixing with other ingredients. Mixed material is dispensed from the apparatus through a dispensing compartment (34) and a discharge outlet (41). A closure member (36) and closure plate (66) isolate the mixing and washing compartments (18) and (19) from the respective dispensing and chopping compartments (34) and (62) during mixing and washing, respectively.

Fig 2

The present invention relates to mixing apparatus of the type comprising a container defining a hollow interior region which forms a mixing compartment, a mixing means in the mixing compartment for mixing material therein, and a dispensing outlet being provided from the mixing compartment.

Highly nutritional animal feeds comprise many ingredients, such ingredients may vary depending on the time of year and the particular type of crops that are available at a given time. A particularly nutritious ingredient for animal feed is fodder beet. However, where fodder beet is used as an ingredient in animal feed, it is essential that the fodder beet be chopped. This in general requires a number of operations in the preparation of animal feed. Firstly, the beet has to be washed in order to remove soil and the like from the root crop. Secondly, the beet has to be chopped, and thirdly mixed with the other ingredients. In practice this requires a number of different apparatus being available on a farm. Firstly, a container for washing the beet is required. Secondly, apparatus for chopping the beet is required, and thirdly, a container for mixing the beet is required. In certain cases, the same container may be used for washing the beet and mixing the ingredients of the feed, however, this requires transferring the unchopped beet from the container after washing to the chopping apparatus, and returning the chopped beet to the container for mixing with other ingredients. Furthermore, the container must be thoroughly washed to remove soil residues and the like from the beet after washing before the ingredients of the animal feed can be placed in the container. Accordingly, it will be appreciated that to use fodder beet, or indeed, any other root crop, or any other ingredient which requires washing and chopping is inconvenient, and furthermore, requires the additional capital cost of additional equipment and machinery, and also is relatively labour intensive in that an undesirable amount of handling of the fodder beet is required before it can be mixed with the remaining ingredients of the animal feed.

Apparatus for mixing ingredients of animal feed is known, such apparatus, in general, comprises a container which defines a hollow interior region which forms a mixing compartment. A mixing means, generally, a mixing rotor is rotatably mounted in the mixing compartment for mixing materials therein. A dispensing outlet is provided from the mixing compartment through which mixed animal feed is dispensed. A typical mixing apparatus is disclosed in British Patent Specification GB 2,139,911A. Apparatus for washing and chopping root crop vegetables, for example, beet is disclosed in European Patent Specification No. EP 0,392,871A. While this apparatus is also suitable for mixing ingredients of animal feed, it is necessary that the root crop vegetables be washed and chopped first, and then transferred back into the washing compartment for subsequent mixing with other ingredients. This it will be appreciated is inconvenient. No suitable apparatus is provided for washing, chopping and mixing ingredients of animal feed which operates in an effective efficient manner.

There is therefore a need for apparatus which is suitable for washing, chopping and mixing ingredients for preparing animal feed, and which is also suitable for washing, chopping and mixing other materials.

The present invention is directed towards providing such mixing apparatus.

The invention overcomes the problems of known apparatus by virtue of the fact that the mixing apparatus comprises a container which defines a hollow interior region, and the hollow interior region is partitioned to form a mixing compartment for mixing material, and a discrete washing compartment for washing at least some of the material to be mixed in the mixing compartment, mixing means being provided in the mixing compartment for mixing material therein, and a dispensing outlet being provided from the mixing compartment, agitating means being provided in the washing compartment for agitating the material being washed, a chopping means communicating with the washing compartment for chopping material from the washing compartment, and communicating means communicating the chopping means with the mixing compartment for delivering chopped material from the chopping means to the mixing compartment.

The advantages of the invention are many. However, one of the most important advantages of the invention is that material which is washed and chopped is delivered directly to the mixing compartment for mixing with other materials. The material being washed and chopped can be washed and chopped simultaneously while other materials are being mixed in the mixing compartment. Further, the chopped material may be delivered into the mixing compartment during mixing. Alternatively, material may be washed in the washing compartment, chopped and then delivered into the mixing compartment and then other materials may be delivered into the mixing compartment and mixed with the chopped material. A particularly important advantage of the invention is achieved by virtue of the fact that the mixing compartment and washing compartment are formed by a single container which is partitioned to form the two compartments. This leads to a particularly compact, robust, efficient and relatively inexpensive apparatus.

In one embodiment of the invention the chopping means comprises a chopper having a rotatably mounted chopping rotor co-operating with a stator means.

The advantage of this feature of the invention is that the material to be chopped is chopped efficiently.

In another embodiment of the invention a chopper housing is provided, the chopper housing defining a chopping compartment, the chopping rotor being rotatable within the chopping compartment.

The advantage of this feature of the invention is that a particularly efficient and compact construction of apparatus is provided.

Preferably, a dispensing housing defining a dispensing compartment from which mixed material is dispensed communicates with the mixing compartment through the dispensing outlet, dispensing means being rotatably mounted in the dispensing compartment for dispensing mixed material from the dispensing compartment, the chopping rotor and dispensing means being mounted on a common shaft which defines a common rotational axis for the dispensing means and the chopping rotor.

The advantage of providing a dispensing housing is that mixed material can readily easily be dispensed from the apparatus in a controlled manner. By providing a rotatable dispensing means in the dispensing compartment effective and efficient dispensing of the mixed material is achieved in a controlled manner. By providing the chopping rotor and dispensing means on a common shaft a particularly efficient, relatively low cost and robust apparatus is provided.

Advantageously, biasing means urges the stator means into a chopping position co-operating with the chopping rotor for chopping the material, the stator means being moveable from the chopping position to a relieved position against the biasing means to permit passage of an unchoppable object through the chopper to avoid damage to the chopping means.

The advantage of this feature of the invention is that should a stone, or other unchoppable article or object pass into the chopper, such article will pass through the chopper without damaging the chopper.

Preferably, a washing compartment outlet is provided from the washing compartment, the chopping means communicating with the washing compartment through the washing compartment outlet, isolating means being provided for selectively closing the washing compartment outlet for isolating the chopping means from the washing compartment.

The advantage of this feature of the invention is that a relatively efficient apparatus is provided. By providing isolating means between the washing compartment and the chopping means, washing of material prior to chopping can effectively and efficiently be carried out in the washing compartment.

Advantageously, the washing compartment and mixing compartment are longitudinally aligned, and the mixing rotor and agitating rotor are mounted on a common rotor shaft which defines a common rotational axis of the mixing rotor and agitating rotor, the common rotor shaft being rotatably mounted in the container.

The advantage of this feature of the invention is that a particularly efficient construction of apparatus is provided. By mounting the mixing and agitating rotors on a common rotor shaft, a particularly efficient, relatively low cost and robust construction of apparatus is provided.

In one embodiment of the invention a drain outlet is provided from the washing compartment for draining a liquid from the washing compartment, drain closure means being co-operable with the drain outlet for selectively closing the drain outlet.

The advantage of this feature of the invention is that it facilitates effective and efficient washing of the material in the washing compartment, and it also facilitates relatively rapid sluicing of water from the washing compartment, which tends to wash soil and other residues from the material being washed through the drain outlet.

Preferably, the communicating means comprises a conveying means for delivering chopped material from the chopping means through an inlet to the mixing compartment.

The advantage of this feature of the invention is that it provides for efficient transfer of chopped material from the chopping means to the mixing compartment, and also facilitates in providing a relatively low cost and robust apparatus and an apparatus which operates effectively and efficiently.

Advantageously, the conveying means comprises an auger screw terminating in delivery means radially extending from an auger shaft of the auger screw for delivering the chopped material through the inlet into the mixing compartment.

The advantage of this feature of the invention is that it provides a relatively efficient and effective transfer of chopped material from the chopping means to the mixing compartment.

The invention will be more clearly understood from the following description of a preferred embodiment thereof, given by way of example only, with reference to the accompanying drawings, in which:

Fig. 1 is a perspective view of mixing apparatus according to the invention,

Fig. 2 is a perspective view of portion of the mixing apparatus of Fig. 1,

Fig. 3 is a cut-away perspective view of the portion of the apparatus of Fig. 2,

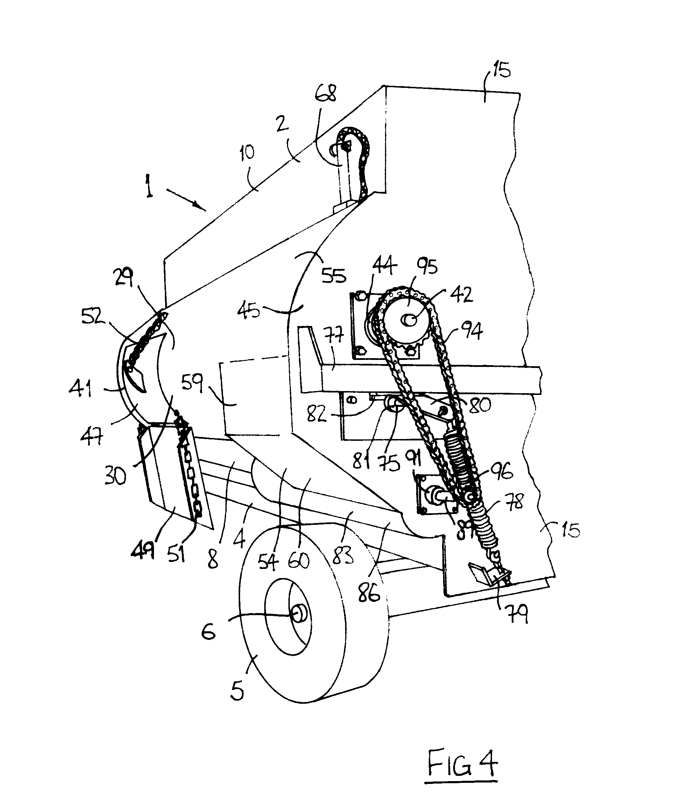

Fig. 4 is a perspective end view of another portion of the apparatus of Fig. 1,

Fig. 5 is a cut-away perspective view of the apparatus of Fig. 1,

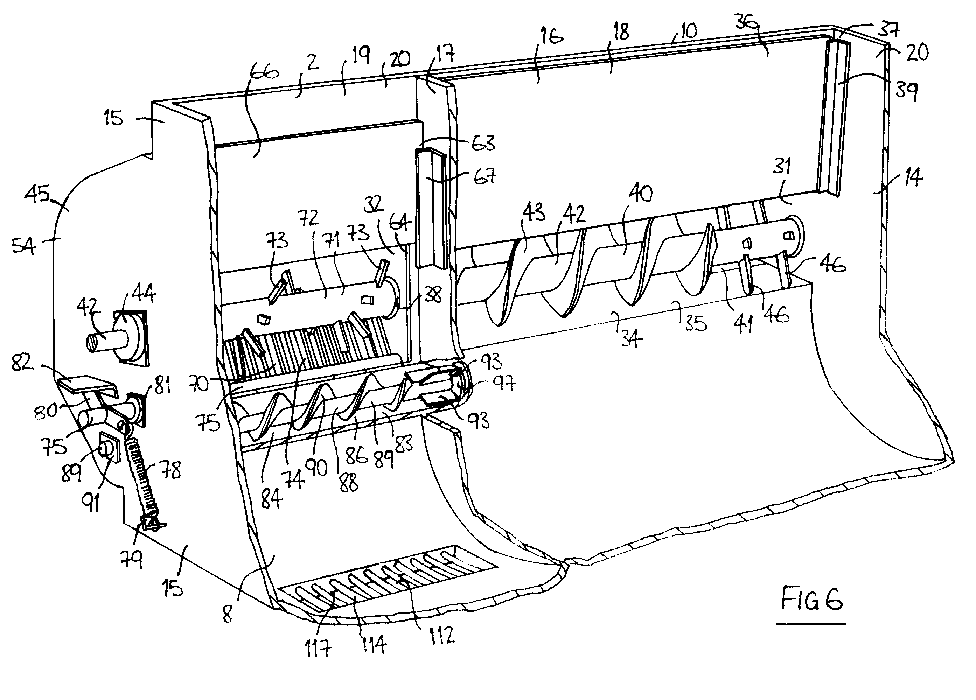

Fig. 6 is a cut-away perspective view similar to Fig. 5 of the apparatus of Fig. 1,

Fig. 7 is a side cross sectional view on the line VII-VII of Fig. 8,

Fig. 8 is an end cross sectional view of portion of the apparatus on the line VIII-VIII of Fig. 7,

Fig. 9 is an end cross sectional view of portion of the apparatus on the line IX-IX of Fig. 7,

Fig. 10 is a further cut-away perspective view of portion of the apparatus of Fig. 1, and

Fig. 11 is a perspective view of a detail of the apparatus of Fig. 1.

Referring to the drawings, there is illustrated mixing apparatus according to the invention indicated generally by the reference numeral 1 for mixing materials. In this embodiment of the invention, the apparatus 1 is particularly suitable for preparing animal feed from a number of ingredients. The mixing apparatus 1, as will be described below, is suitable for washing one or more of the ingredients of the animal feed and for chopping the washed ingredient and then mixing the chopped ingredient with other ingredients. Typically the mixing apparatus 1 is suitable for washing fodder beet or other root crop vegetables and then chopping the root crop vegetable, and then mixing the chopped root crop vegetable with the other ingredients of the animal feed.

The mixing apparatus 1 comprises a container 2 of steel plate material mounted on a chassis 4 of steel. Ground engaging wheels 5 are rotatably mounted on stub shafts 6 extending from the chassis 4. A tow hitch 7 extends from the chassis 4 for hooking the mixing apparatus 1 to a tractor or the like for towing and powering. The container 2 comprises a base 8 of substantially semi-cylindrical construction and side walls 10 and 11 extending upwardly from the base 8. Front and rear end walls 14 and 15 extend upwardly from the base 8 and between the side walls 10 and 11, and define with the base 8 and side walls 10 and 11 a hollow interior region 16. A partition wall 17 of steel plate extending upwardly from the base 8 and transversely between the side walls 10 and 11 partitions the hollow interior region 16 into two in line compartments, namely, a mixing compartment 18 and a washing compartment 19. The ingredients of the animal feed are mixed in the mixing compartment 18, while the ingredients to be washed and chopped are washed in the washing compartment 19. Top edges of the side, front, rear and partition walls 10,11,14,15 and 17 define open mouths 20 to the respective mixing and washing compartments 18 and 19.

Mixing means for mixing the ingredients in the mixing compartment 18 comprises a mixing rotor 21 rotatably mounted in the mixing compartment 18. Agitating means for agitating the material during washing comprises an agitating rotor 22 rotatably mounted in the washing compartment 19. The mixing and agitating rotors 21 and 22 are mounted on and rotated by a common rotor shaft 23. The rotor shaft 23 is rotatably mounted in bearings 24 in the front and rear end walls 14 and 15, and defines the rotational axis of the rotors 21 and 22. An opening (not shown) in the partition wall 17 accommodates the rotor shaft 23, and a seal (not shown) in the opening (not shown) extending around the rotor shaft 23 sealably engages the rotor shaft 23 to prevent the passage of a cleansing liquid from the washing compartment 19 to the mixing compartment 18. The mixing rotor 21 comprises radial mounting members 25 of steel, which extend radially from the rotor shaft 23 and which carry mixing paddles 26 of angle section steel for mixing the ingredients in the mixing compartment 18. The agitating rotor 22 comprises radial members 27 of steel extending radially from the rotor shaft 23 which carry agitating paddles 28 of angle section steel for engaging and agitating the material to be washed in the washing compartment 19. The rotational axis of the rotor shaft 23 substantially co-incides with the axis of generation of the semi-cylindrical base 8 and the paddles 26 and 28 are mounted on the radial members 25 and 27, respectively, at a radial distance from the rotational axis of the rotor shaft 23 slightly less than the radius of the inner surface of the base 8 so that on rotation of the rotors 21 and 22 the paddles 26 and 28, respectively, sweep over the inner surface of the base 8.

Drive transmission means described briefly below, rotates the rotor shaft 23 in the direction of the arrow A, causing the paddles 26 and 28 to rotate with the shaft 23 for mixing and agitating the materials in the compartments 18 and 19, respectively.

A dispensing housing 29 from which mixed animal feed is dispensed from the mixing compartment 18 extends sidewardly from and between the base 8 and the side wall 10. The dispensing housing 29 comprises a curved side wall 30 of steel plate extending upwardly and outwardly from the base 8 and then inwardly upwardly towards the side wall 10. A front end wall portion 31 extending from the front end wall 14 closes one end of the dispensing housing 29, and a partition wall 32 of steel plate coinciding with the partition wall 17 closes the other end of the housing 29 and forms with the side wall 30 and front end wall portion 31 a dispensing compartment 34. The dispensing compartment 34 extends longitudinally of and communicates with the mixing compartment 18 through a rectangular dispensing outlet 35 formed between the base 8 and the side wall 10 and extending the length of the dispensing compartment 34 and mixing compartment 18. The dispensing compartment 34 and its relationship with the mixing compartment 18 is substantially similar to dispensing and mixing compartments of apparatus for mixing and dispensing material which is described in British Patent Specification No. GB 2,139,911A, and only those aspects of the mixing and dispensing compartment relative to the present invention will be described in detail.

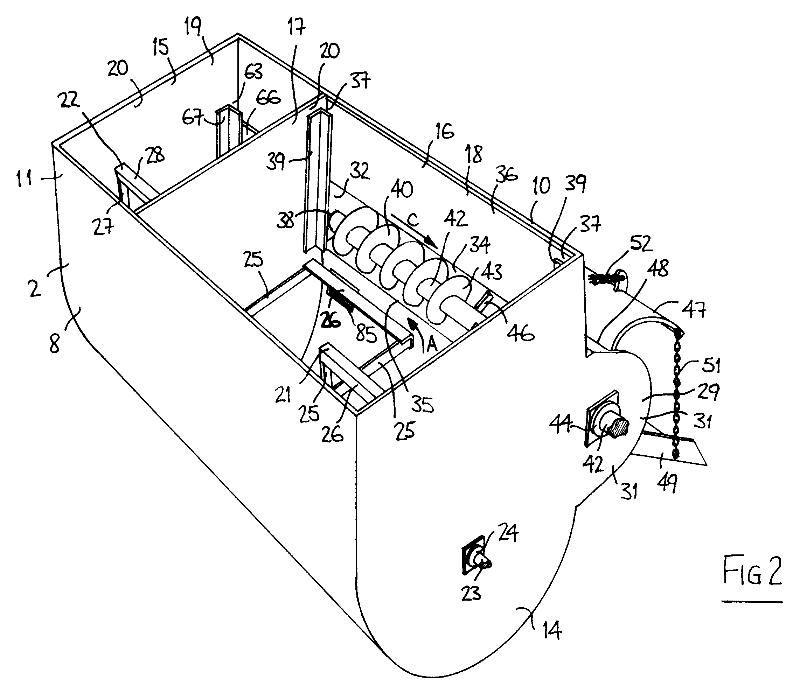

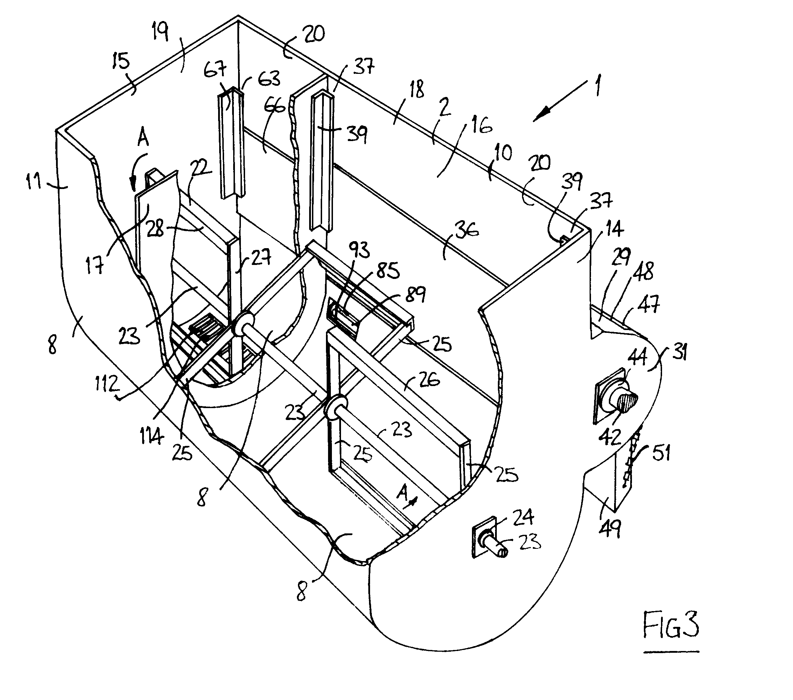

A closure means comprising a closure member 36 of steel plate closes the dispensing outlet 35 for selectively isolating the dispensing compartment 34 from the mixing compartment 18 while the ingredients are being mixed in the mixing compartment 18. The closure member 36 is slidable in guide channels 37 formed by guides 39 of angle iron mounted on the front end wall 14 and the partition wall 17. The closure member 36 is slidable in the guides 39 from a raised open position illustrated in fig. 2 to a lower closed position illustrated in Fig. 3 by a hydraulic ram (not shown) through a linkage mechanism (also not shown). However, the operation of a closure member similar to the closure member 36 is clearly described in British Patent Specification No. GB 2,139,911A.

A dispensing means comprising a dispensing auger 40 of steel is rotatably mounted in the dispensing compartment 34 for urging and dispensing mixed animal feed through a discharge outlet 41 in the side wall 30. The auger 40 comprises a main auger shaft 42 rotatable in bearings 44 in the front end wall portion 31 and in a corresponding rear end wall portion 45 extending from the rear end wall 15. An opening 38 in the partition wall 32 accommodates the main auger shaft 42. The main auger shaft 42 carries auger flights 43 over portion of its length in the dispensing compartment 34 for urging mixed animal feed in the dispensing compartment 34 towards the discharge outlet 41. In this embodiment of the invention the auger shaft 42 carries auger flights 43 on its length extending between the partition wall 32 and the discharge outlet 41. The main auger shaft 42 defines a rotational axis which is parallel to the rotational axis of the rotor shaft 23.

Discharge spikes 46 of steel radially extending from the main auger shaft 42 discharge animal feed from the dispensing compartment 34 through the discharge outlet 41. A door 47 of steel plate hinged at 48 to the side wall 30 selectively closes the discharge outlet 41. A chain 52 extending from the door 47 is connected to the linkage mechanism (not shown) for operating the closure member 36 for opening and closing the door 47.

The operation of a door similar to the door 47 is described in the mixing and dispensing apparatus in British Patent Specification No. GB 2,139,911A. The door 47 is opened on the closure member 36 being opened, and is closed on the closure member 36 being closed. A chute 49 of steel plate hinged at 50 and connected to the door 47 by chains 51 directs the mixed animal feed dispensed through the discharge outlet 41 into a trough or the like.

The drive transmission means, described briefly below drives the main auger shaft 42 in the direction of the arrow B for urging the animal feed in the direction of the arrow C towards the discharge outlet 41. Thus, as the auger shaft 42 rotates in the direction of the arrow B the discharge spikes 35 fling the animal feed through the discharge outlet 41.

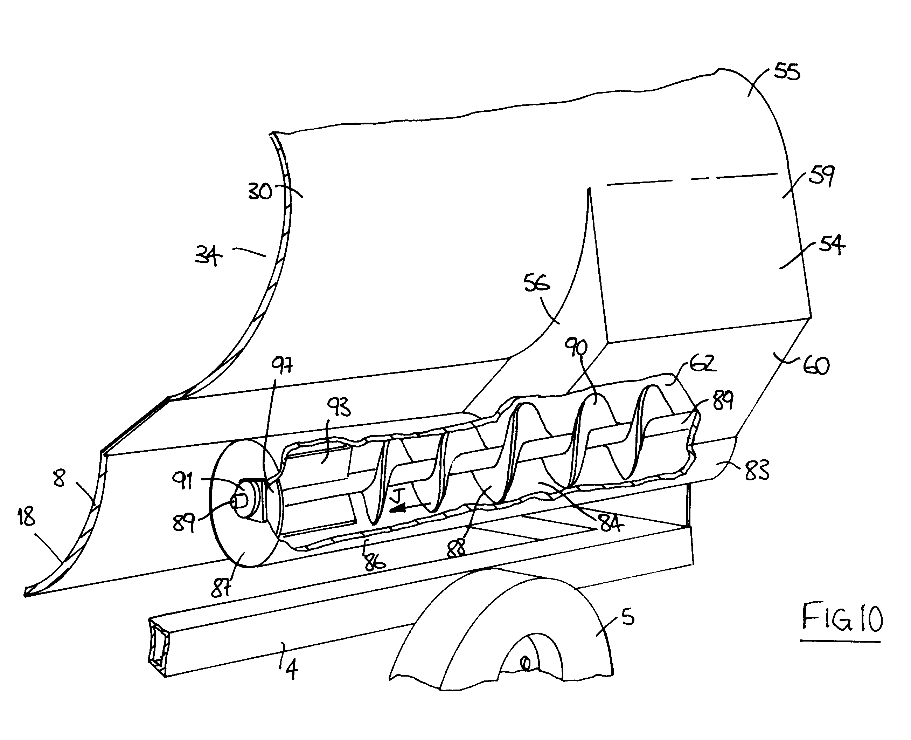

A chopper housing 54 for housing chopping means (described below) for chopping material from the washing compartment 19 is formed by a wall 55 extending rearwardly from the side wall 30 between the partition wall 32 and the rear end wall portion 45 of the rear end wall 15. A portion 56 of the partition wall 32 extends downwardly from the side wall 30, see Fig. 10. A side wall 59 and a base wall 60 extending between the portion 56 of the partition wall 32 and the rear end wall portion 45 define with the wall 55 and the partition wall 32 a chopping compartment 62. The chopping compartment 62 communicates with the washing compartment 19 through a washing compartment outlet 64 formed by a rectangular opening extending between the base 8 and the side wall 10 and extending longitudinally along the length of the washing compartment 19.

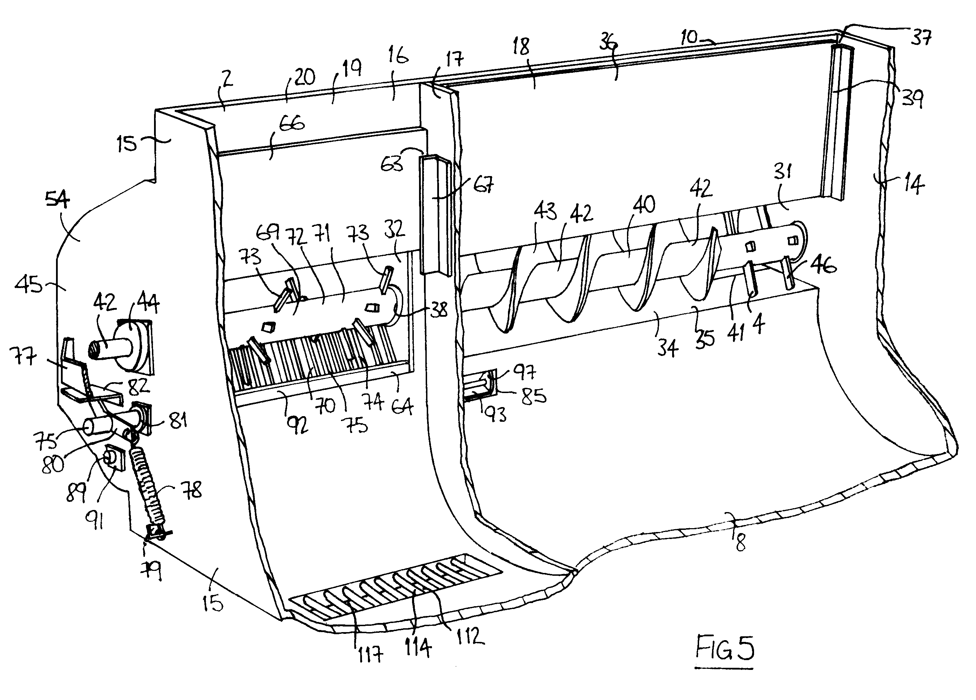

Isolating means comprising a closure plate 66 of steel plate selectively closes the outlet 64 for isolating the chopping compartment 62 from the washing compartment 19 while material is being washed in the washing compartment 19. The closure plate 66 is slidable in guide channels 63 formed by guides 67 of angle iron on the rear end wall 15 and the partition wall 17 from a raised open position illustrated in Fig. 5 to a lower closed position illustrated in Fig. 3. An hydraulic ram 68 mounted on the wall 55 and connected to the closure plate 66 by a bracket 65 slides the closure plate 66 between the open raised position with the chopping compartment 62 and washing compartment 19 communicating to the closed lower position with the outlet 64 closed and the chopping compartment 62 isolated from the washing compartment 19.

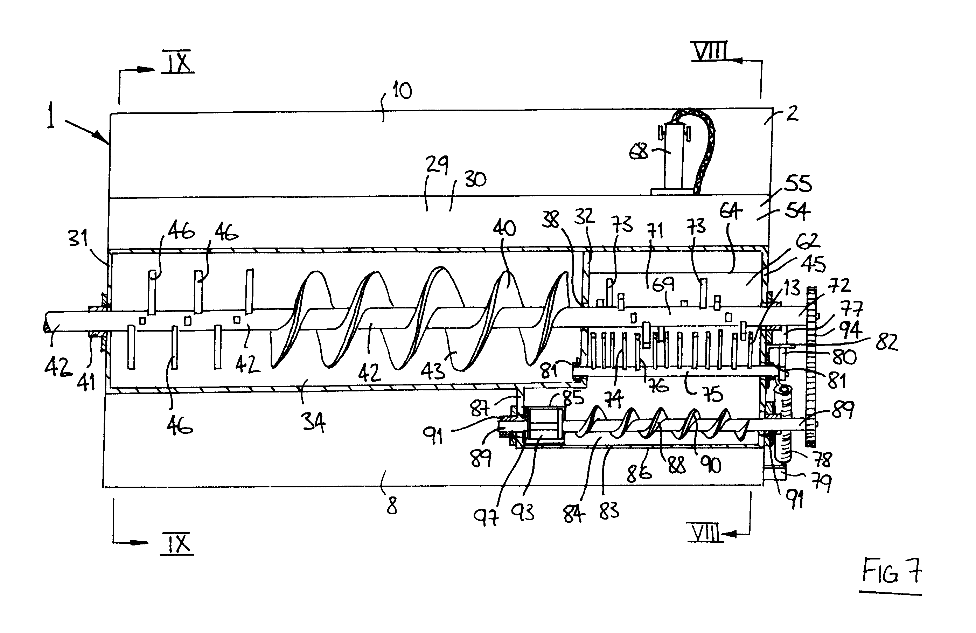

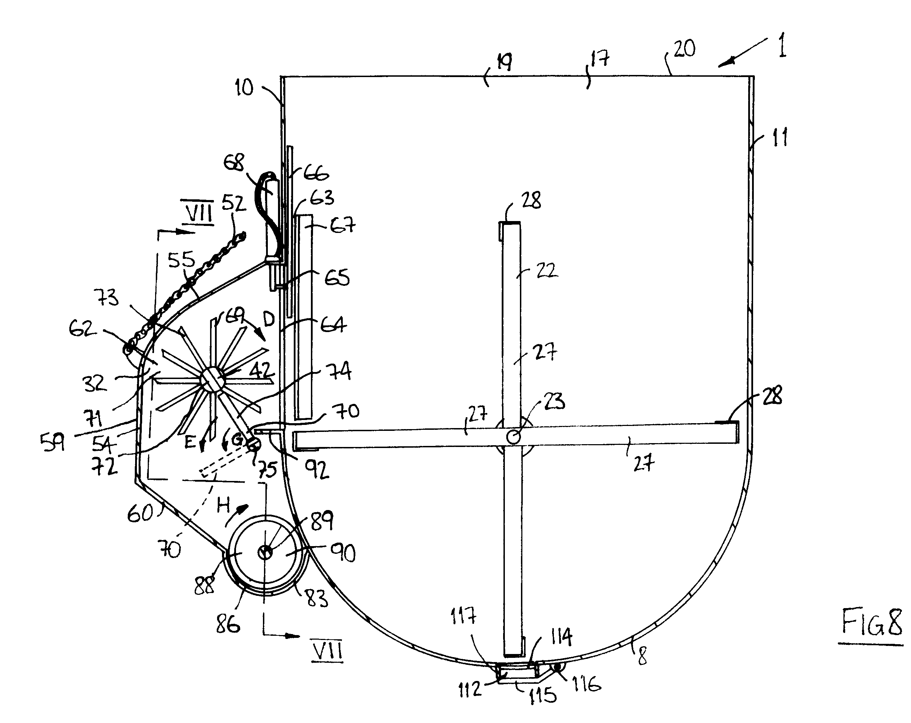

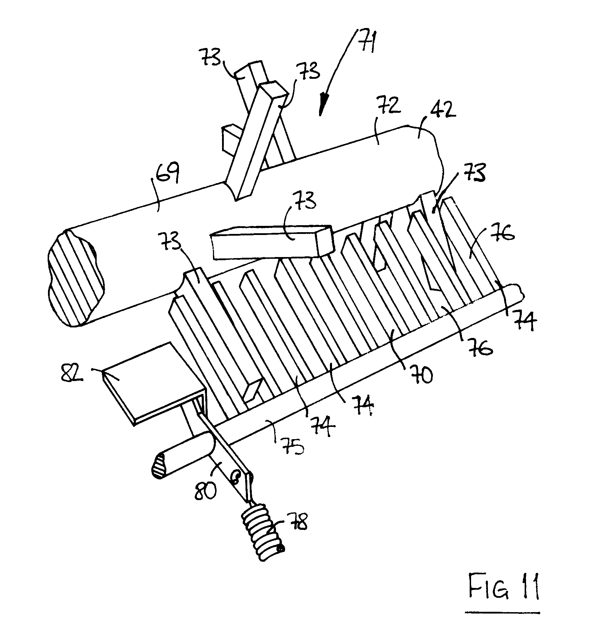

The chopping means is provided by a chopper 71, which comprises a chopping rotor 69 rotatable in the chopping compartment 62 and co-operable with a stator means, namely, a stator 70 for chopping the material. The chopper 71 communicates with and receives washed material from the washing compartment 19 through the outlet 64. The chopping rotor 69 is formed by a rear chopper portion 72 of the main auger shaft 42 and a plurality of elongated chopping members 73 of rectangular section steel welded to and radially extending from the chopper portion 72 of the auger shaft 42. Accordingly, the main auger shaft 42 forms a common shaft for the dispensing auger 40 and the chopping rotor 69, and defines a common rotational axis for the dispensing auger 40 and the chopping rotor 69. On rotation of the chopping rotor 69 in the direction of the arrow D, see Fig. 8, the chopping members 73 co-operate with a plurality of corresponding stator members 74 of the stator 70 for chopping material as it passes through the chopper 71 in the direction of the arrow E. The stator members 74 are welded to and extend from a stator shaft 75 of the stator 70. The stator shaft 75 is pivotally mounted in bearings 81 in the rear end wall portion 45 and the partition wall 32 as will be described below. The stator shaft 75 is parallel to the main auger shaft 42, and is positioned so that the chopping members 73 clear the stator shaft 75, and the stator members 74 extend to a position just short of the chopper portion 72 of the auger shaft 42. The stator members 74 are spaced apart from each other and define slots 76 which accommodate the chopping members 73 so that as the chopping members 73 pass through the slots 76 between the stator members 74 the material is chopped. The chopping members 73 and stator members 74 are of steel and of substantially rectangular cross section and mounted on their respective shafts 72 and 75 to provide relatively small clearance between the chopping members 73 and adjacent stator members 74 for efficient chopping. The chopping members 73 are staggered around the chopper portion 72 of the auger shaft 42 along a helical path to provide an even loading on the main auger shaft 42 as the shaft 42 rotates during chopping, see Figs. 7 and 11. In this embodiment of the invention thirteen stator members 74 are provided which define twelve slots 76 for accommodating twelve chopping members 73. A lip 92 extending from the base 8 at the outlet 64 into the chopping compartment 62 delivers beet into the chopper 71.

The stator 70 is urged into a chopping position illustrated in Figs. 8 and 11 co-operating with the chopping rotor 69 by biasing means, in this case, a tension spring 78. The tension spring 78 extends between an anchor bracket 79 on the rear end wall 15 and a radial arm 80 fast on the stator shaft 75. A stop means formed by a reinforcing member 77 extending transversely of the rear end wall 15 engages an end plate 82 formed on the radial arm 80 for retaining the stator 70 in the chopping position under the biasing action of the spring 78. The stator 70 is pivotal in the direction of the arrow G into a relieved position illustrated in broken lines in Fig. 8 disengaged from the chopping rotor 69 to permit the passage of an unchoppable article, such as, for example, a stone or the like between the chopping rotor 69 and the stator 70 without damage to the chopping members 73 or stator members 74. The tension force in the spring 78 is set so that the stator 70 remains in the chopping position during chopping unless an overload is caused by a stone or the like.

Communicating means comprising an auger housing 83 defining a hollow interior region 84 communicates the chopping compartment 62 with the mixing compartment 18 through a mixing compartment inlet 85 for delivering chopped material from the chopper 71 into the mixing compartment 18. The auger housing 83 is formed by a partly cylindrical wall 86 extending along the bottom of the chopper housing 54 and forwardly from the portion 56 of the partition wall 32 along the base 8. An end wall 87 closes the auger housing 83. An auger screw 88 extends along the bottom of the chopping compartment 82 and through the interior region 84 of the auger housing 83 for collecting and delivering chopped material through the inlet 85 into the mixing compartment 18. The auger screw 88 comprises an auger shaft 89 rotatable in bearings 91 in the rear end wall portion 45 and the end wall 87. The auger shaft 89 is parallel to the auger shaft 42 and carries an auger flight 90 through the chopping compartment 62 and into a portion of the interior region 84 of the auger housing 83. Delivery means for delivering the chopped material from the auger screw 88 through the inlet 85 into the mixing compartment 18 comprises a plurality of vanes 93 of steel which extend longitudinally along and radially outwardly from the auger shaft 89. In this case three vanes 93 are provided equispaced around the shaft 89. An end disc 97 extending radially from the shaft 89 further assists in delivering chopped beet through the inlet 85. The auger shaft 89 is driven in the direction of the arrow H for urging the chopped material in the direction of the arrow J towards the inlet 85 by a chain drive from the auger shaft 42 at the rear end wall portion 45. The chain drive comprises a chain 94 around sprockets 95 and 96 fast on the auger shafts 42 and 89, respectively.

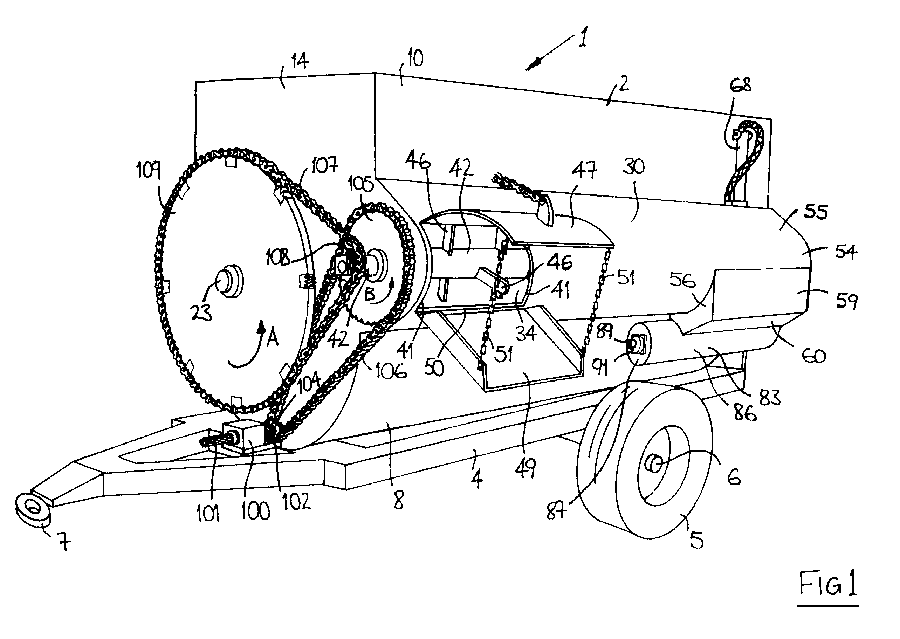

The drive transmission means for driving the mixing rotors 21 and 22, the dispensing auger 40, the chopping rotor 69 and auger screw 88 is provided on the outer side of the front end wall 14, see Fig. 1.

The drive transmission means comprises a gear box 100 mounted on the front end wall 14 having an input shaft 101 for receiving drive from a power take off shaft of a tractor or other suitable power source. An output shaft (102) from the gear box 100 carries a sprocket 104 fast thereon and drives a sprocket 105 fast on the main auger shaft 42 in the direction of the arrow B through a chain drive 106. The rotor shaft 23 is driven in the direction of the arrow A through a chain drive 107 around sprockets 108 and 109 fast on the auger shaft 42 and the rotor shaft 23, respectively, so that the mixing and agitating rotor 21 and 22 and dispensing auger 40 are simultaneously driven as are the chopping rotor 69 and auger screw 88.

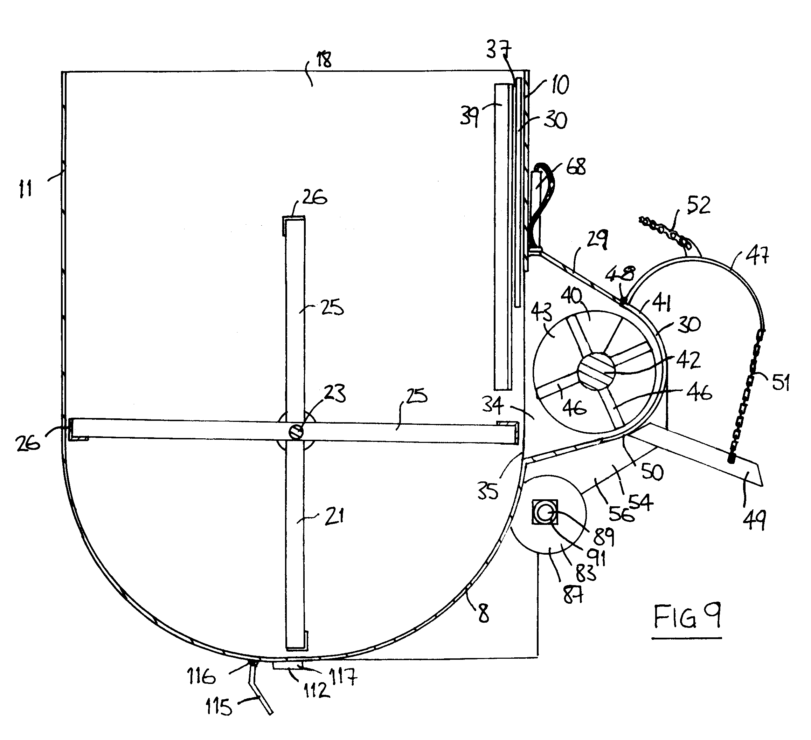

A drain outlet 112 in the base 8 of the washing compartment drains water and soil residue and other residues from the material washed in the washing compartment 19. The drain outlet 112 is of substantial rectangular shape and extends longitudinally substantially the length of the washing compartment 19 from the rear end wall 15 to the partition wall 17. A grid formed by a plurality of transverse bars 114 extending across the drain outlet 112 prevents fodder beet or other material passing through the drain outlet 112. A drain closure means comprising a closure flap 115 pivotally connected to the base 8 at 116 selectively closes the drain outlet 112. An hydraulic ram (not shown) pivots the closure flap 115 from a closed position illustrated in Fig. 8 closing the drain outlet 112 to an open position illustrated in Fig. 9 with the drain outlet 112 opened. A seal (not shown) extends round the closure flap 115 and co-operates with a peripheral edge 117 of the drain outlet 112 for sealing the drain outlet 112 when the closure flap 115 is in the closed position.

Hydraulic control apparatus (not shown) for controlling the operation of the hydraulic rams for operating the closure member 36, the closure plate 66 and the closure flap 115 is also provided. Such control apparatus which includes valves (not shown) and control mechanisms (also not shown) will be well known to those skilled in the art.

In use, the mixing apparatus 1 is hooked up to a tractor or other suitable power source by the hitch 7. The power take off shaft of the tractor is connected to the input shaft 101 of the gear box 100 by a suitable drive shaft. The hydraulic control apparatus (not shown) is connected to the hydraulic system of the tractor. With the closure member 36 and the closure plate 66 in the closed position fodder beet or other material to be washed is loaded into the washing compartment 19 with the agitating rotor 22 rotating. As discussed above the mixing rotor 21, the chopping rotor 69, the dispensing rotor 40 and the auger screw 88 will also be rotating, but will not be required. The drain outlet 112 is closed by the closure flap 115 and water or other suitable cleansing liquid is delivered into the washing compartment 19. The fodder beet and water are agitated by the agitating effect of rotation of the agitating rotor 22. Agitation of the fodder beet causes soil and other foreign matter adhering to the surface of the fodder beet to be dislodged. The water completes the cleaning of the fodder beet. After the fodder beet has been adequately washed, the drain outlet 112 is opened by pivoting the closure flap 115 rapidly into the open position to rapidly sluice the water from the washing compartment 19, thereby draining the water and as much of the soil residue as possible through the drain outlet 112. On the water being drained from the washing compartment 19, the closure plate 66 is moved into the open position by the ram 68, thereby opening the washing compartment outlet 64. The rotating action of the agitating rotor 22 urges fodder beet from the washing compartment 19 through the outlet 64 into the chopping compartment 62. The chopping rotor 69 of the chopper 71 which is rotating chops the fodder beet. The chopped fodder beet drops onto the auger screw 88 which is rotating. The chopped fodder beet is collected and delivered by the auger screw 88 from the chopping compartment 62 through the inlet 85 into the mixing compartment 18.

The mixing rotor 21 rotating in the mixing compartment 18 and sweeping the paddles 26 past the inlet 85 continuously removes chopped fodder beet as it enters the inlet 85 to prevent a build up of chopped fodder beet around the inlet 85. When the fodder beet from the washing compartment 19 has been completely chopped and delivered into the mixing compartment 18, the remaining ingredients of the animal feed are added into the mixing compartment 18 where they are thoroughly mixed by the mixing rotor 21. During the time the ingredients are being mixed in the mixing compartment 18, the closure member 36 is retained in the closed position to avoid any of the material in the mixing compartment 18 entering the dispensing compartment 34. When the ingredients in the mixing compartment are thoroughly mixed and it is desired to dispense the mixed animal feed through the discharge outlet 41, the closure member 36 is raised into the opening position communicating the mixing compartment 18 with the dispensing compartment 34. Because of the inter connection of the door 47 with the linkage (not shown) which operates the closure member 36 the door 47 is opened on opening of the closure member 36 and the chute 49 is raised into the position illustrated in Fig. 1. The rotation of the mixing rotor 21 in the direction of the arrow A causes the paddles 26 of the mixing rotor 21 to urge feed into the dispensing compartment 34. The dispensing auger 40 rotating in the direction of the arrow B urges the animal feed in the direction of the arrow C towards the discharge outlet 41 and the discharge spikes 46 on the auger shaft 42 fling the animal feed through the discharge outlet 41.

If desired, ingredients of the animal feed may be mixed in the mixing compartment 19 simultaneously with washing and/or chopping of the fodder beet or other material in the washing compartment 19 and/or chopping compartment 62. On completion of the washing of the fodder beet, the fodder beet would then be chopped in the chopper 71 and conveyed by the auger screw 88 into the mixing compartment 18 where it would be mixed with the remaining ingredients in the mixing compartment. The action of the auger screw 88 and delivery vanes 93 is sufficient to deliver chopped material into the mixing compartment 18 while other ingredients of the animal feed are being mixed.

During chopping of the fodder beet or other material, should a stone or other rigid article or object pass into the chopper 71, the action of the chopping members 73 of the chopping rotor 69 on the stone against the stator 70, urges the stator 70 in the direction of the arrow G into the relieved position illustrated by broken lines in Fig. 8, thereby allowing the stone or rigid object to pass through the chopper 71 without damaging the chopping members 73 or stator members 74 or any other part of the chopper 71.

While a particular construction of chopping means has been described, any other suitable chopping means may be used. Additionally, while a particular construction of auger screw has been described for conveying chopped material to the mixing compartment, any other construction of auger or conveying means may be provided. Indeed, it is envisaged that any other suitable communicating means may be used for delivering the chopped material into the mixing compartment. In certain cases, it is envisaged that the communicating means may comprise a chute which would deliver the chopped material under gravity into the mixing compartment. Furthermore, any other shape and construction of mixing and washing compartments may be provided, and it is not necessary that the mixing and agitating compartments be longitudinally aligned. While it is preferable, it is not essential that the mixing and agitating rotors be on a common shaft. Indeed, it is envisaged that the mixing and agitating rotors may be provided on separate shafts.

While an isolating means has been described for isolating the washing compartment from the chopping compartment, this is not essential. In certain cases, it is envisaged that the isolating means may be dispensed with. Needless to say where an isolating means is provided any other suitable isolating means besides a closure plate may be provided. Indeed, in certain cases the isolating means may be formed by a grid or other open mesh structure. Furthermore, where an isolating means is provided, any other suitable arrangement for opening and closing the isolating means may be provided. It will be appreciated that as well as being openable and closeable in an upwardly and downwardly direction, the isolating means could be operable from side to side, and may be slidably or pivotally mounted. Furthermore, where the isolating means is operable in an upwardly and downwardly direction, the operation of the isolating means could be such that the isolating means would operate from a raised closed position to a lower open position. Furthermore, any other suitable shape and construction or positioning or arrangement of outlet openings from the washing compartment may be provided.

Needless to say, any other suitable drain means from the washing compartment may be provided besides that described. In certain cases, it is envisaged that a drain outlet may be provided from the rear end wall which would be closed by any suitable closure valve or flap.

While the apparatus has been described as comprising a dispensing compartment and dispensing means, while this is advantageous, it is not necessary. In certain cases, it is envisaged that the material may be dispensed directly from a dispensing outlet from the mixing compartment. Furthermore, where the apparatus is provided with a dispensing compartment, any other suitable communicating means between the dispensing compartment and the mixing compartment may be provided and in certain cases, it is envisaged that the closure means isolating the dispensing compartment from the mixing compartment may be dispensed with or other suitable means may be provided.

Further, while the apparatus has been described as being mounted on a chassis with ground engaging wheels, it is envisaged that the apparatus may be mounted in many other ways, for example, in certain cases, it is envisaged that the mixing apparatus may be provided as a stationary apparatus. In which case, suitable drive means and power means would be provided for driving and powering the apparatus. For example, a stationary motor may be mounted adjacent the apparatus for powering the apparatus. Alternatively, the apparatus may be provided with an in-built motor. Further, in certain cases, it is envisaged that the mixing apparatus may be provided with its own in-built power source, which as well as powering the apparatus, would also drive ground engaging wheels for driving the apparatus overland. Needless to say, any other suitable construction of chassis or ground engaging wheels may be provided.

It will of course be appreciated that the mixing apparatus may be attached to any other power source or vehicle besides a tractor.

Further, it will be appreciated that while the mixing apparatus has been described for mixing, washing and chopping ingredients for an animal feed, it will be apparent to those skilled in the art that the apparatus will have many other uses. The apparatus may be used for mixing, washing and chopping many other materials besides ingredients for animal feed.

## Claims

1. Mixing apparatus of the type comprising a container (2) defining a hollow interior region (16) which forms a mixing compartment (18), a mixing means (21) in the mixing compartment (18) for mixing material therein, a dispensing outlet (35) being provided from the mixing compartment (18) characterised in that the hollow interior region (16) is partitioned to form the mixing compartment (18) and a discrete washing compartment (19) for washing at least some of the material to be mixed in the mixing compartment (18), agitating means (22) being provided in the washing compartment (19) for agitating the material being washed, a chopping means (71) communicating with the washing compartment (19) for chopping material from the washing compartment (19), and communicating means (84,85,88) communicating the chopping means (71) with the mixing compartment (18) for delivering chopped material from the chopping means (71) to the mixing compartment (18).

2. Mixing apparatus as claimed in Claim 1 characterised in that the chopping means (71) comprises a chopper (71) having a rotatably mounted chopping rotor (69) co-operating with a stator means (70).

3. Mixing apparatus as claimed in Claim 2 characterised in that a chopper housing (54) is provided, the chopper housing (54) defining a chopping compartment (62), the chopping rotor (69) being rotatable within the chopping compartment (62).

4. Mixing apparatus as claimed in Claim 2 or 3 characterised in that a dispensing housing (29) defining a dispensing compartment (34) from which mixed material is dispensed communicates with the mixing compartment (18) through the dispensing outlet (35), dispensing means (40) being rotatably mounted in the dispensing compartment (34) for dispensing mixed material from the dispensing compartment (34), the chopping rotor (69) and dispensing means (40) being mounted on a common shaft (42) which defines a common rotational axis for the dispensing means (40) and the chopping rotor (69).

5. Mixing apparatus as claimed in any of Claims 2 to 4 characterised in that biasing means (78) urges the stator means (70) into a chopping position cooperating with the chopping rotor (69) for chopping the material, the stator means (70) being moveable from the chopping position to a relieved position against the biasing means (78) to permit passage of an unchoppable object through the chopper (71) to avoid damage to the chopper (71).

6. Mixing apparatus as claimed in any preceding claim characterised in that a washing compartment outlet (64) is provided from the washing compartment (19), the chopping means (71) communicating with the washing compartment (19) through the washing compartment outlet (64), isolating means (66) being provided for selectively closing the washing compartment outlet (64) for isolating the chopping means (71) from the washing compartment (19).

7. Mixing apparatus as claimed in any preceding claim characterised in that the washing compartment (19) and mixing compartment (18) are longitudinally aligned, and the mixing rotor (21) and agitating rotor (22) are mounted on a common rotor shaft (23) which defines a common rotational axis of the mixing rotor (21) and agitating rotor (22), the common rotor shaft (23) being rotatably mounted in the container (2).

8. Mixing apparatus as claimed in any preceding claim characterised in that a drain outlet (112) is provided from the washing compartment (19) for draining a liquid from the washing compartment (19), drain closure means (115) being co-operable with the drain outlet (112) for selectively closing the drain outlet (112).

9. Mixing apparatus as claimed in any preceding claim characterised in that the communicating means (84,85,88) comprises a conveying means (88) for delivering chopped material from the chopping means (71) through an inlet (85) to the mixing compartment (18).

10. Mixing apparatus as claimed in any preceding claim characterised in that the conveying means (88) comprises an auger screw (88) terminating in delivery means (93) radially extending from an auger shaft (89) of the auger screw (88) for delivering the chopped material through the inlet (85) into the mixing compartment (18).

FIG 1

Fig 2

FIG 3

EP 0 490 688 A1

FIG 4

FIG 5

EP 0 490 688 A1

14

Fig 6

Fig 7

FIG 8

EP 0 490 688 A1

Fig 9

FIG 10

EP 0 490 688 A1

FIG 11

European Patent
Office

**EUROPEAN SEARCH REPORT**

Application Number

EP 91 31 1580

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | EP-A-0 392 871 (SALFORD) <br> * abstract; figures * <br> --- | 1-10 | B01F7/00 <br> A23N17/00 |
| A,D | GB-A-2 139 911 (KEENAN) <br> --- | | |
| A | US-A-3 370 796 (HERR) <br> --- | | |
| A | SU-A-1 442 170 (EXPER BOTANY) <br> --- | | |
| A | SU-A-1 017 258 (POTATO) <br> ----- | | |

TECHNICAL FIELDS
SEARCHED (Int. Cl.5 )

B01F
A23N

The present search report has been drawn up for all claims

| Place of search | Date of completion of the search | Examiner |
|---|---|---|
| THE HAGUE | 17 MARCH 1992 | PEETERS S. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
……………………………………………
& : member of the same patent family, corresponding
   document

EPO FORM 1503 03.82 (P0401)